# EUROPEAN PATENT APPLICATION

(11) **EP 2 234 020 A1**
(43) Date of publication of application: **29.09.2010**
(21) Application number: 08853893.9
(22) Date of filing: 28.10.2008
(51) Int. Cl.: G06F 13/00, H04L 12/58

(54) **E-MAIL MANAGEMENT DEVICE, COMMUNICATION DEVICE, E-MAIL MANAGEMENT METHOD, AND PROGRAM**

(30) Priority: 28.11.2007 JP 2007306800
(71) Applicant: NEC Corporation, Minato-ku Tokyo 108-8001 (JP)
(72) Inventor: UCHIDA, Kaoru, Tokyo 108-8001 (JP)
(74) Representative: Wenzel & Kalkoff
(86) International application number: PCT/JP2008/069537
(87) International publication number: WO 2009/069419

(57) **Abstract**

E-mail can be inspected even when a communication device on the receiving side is in a disconnected state. When a communication unit (115) of a server (103) receives mail management instructions, a server mail data processor (112) alters inspection conditions in the server data memory unit (113).

## Description

### Technical Field

The present invention relates to an e-mail management device, a communication device, an e-mail management method, and a program for managing e-mail that is transmitted and received by communication equipment.

### Background Art

Electronic-mail (e-mail) is conventionally transmitted and received in communication devices having communication functions such as portable telephones and computers. When a transmitting person sends e-mail from his own communication device and the communication device of the receiving person receives the e-mail, the receiver is able to freely inspect the e-mail. However, the transmitter is unable to manage or control the inspection or re-use of the e-mail.

However, a transmitter may wish to exercise such management or control in some cases. For example, the transmitter may in some cases wish to transmit and show a photograph to a receiver but, out of concern that the photograph may be improperly used if left with the receiver, may wish to delete the photograph when necessary. Alternatively, the transmitter may wish to send explanatory materials for business, but may further wish that inspection of the materials be disallowed before day X or after day Y.

To cope with such requests, the server in the invention described in Patent Document 1 stores e-mail. When a receiver uses a terminal to inspect the e-mail, the server determines whether the e-mail can be inspected or not. In this invention, however, in cases such as when the terminal is outside communication range and the terminal cannot connect with the server, the problem arises in which the e-mail cannot be inspected.

As one method that can be considered for solving this problem, the e-mail and the inspection conditions of the e-mail are saved in the terminal of the receiving person, as in the invention described in Patent Document 2.
Patent Document 1: JP-A-2003-114852
Patent Document 2: JP-A-2005-234660

### Disclosure of the Invention

### Problem to Be Solved by the Invention

In the inventions described in Patent Document 1 and Patent Document 2, the problem arises that once inspection conditions are set, the inspection conditions cannot be altered.

It is an object of the present invention to provide an e-mail management device, a communication device, an e-mail management method, and a program that solve the problem described hereinabove in which the inspection conditions of e-mail cannot be altered.

### Means for Solving the Problem

The e-mail management device according to the present invention is provided with: memory means for storing e-mail addressed to a second communication device and inspection conditions of the e-mail that have been transmitted from a first communication device; reception means for receiving alteration instructions of the inspection conditions of the e-mail from the first communication device, and further, receiving an inspection request of the e-mail from the second communication device; alteration means for altering the inspection conditions in the memory means according to alteration instructions received by the reception means; and inspection permission means for, when the reception means receives the inspection request, permitting the inspection of e-mail that meets the inspection conditions in the memory means.

The communication device according to the present invention is a communication device capable of communication with the e-mail management device and is equipped with: acquisition means for acquiring e-mail addressed to its own terminal from the e-mail management device and inspection conditions of the e-mail; holding means for holding the e-mail and inspection conditions that were acquired by the acquisition means; and terminal permission means for, when the inspection of the e-mail has been requested from a user, transmitting the inspection request to the e-mail management device if its own communication device can connect with the e-mail management device and for permitting inspection of e-mail that meets the inspection conditions in the holding means if its own communication device cannot connect with the e-mail management device.

The first e-mail management method according to the present invention is an e-mail management method realized by an e-mail management device that includes a memory means for storing e-mail addressed to the second communication device and inspection conditions of the e-mail that have been transmitted from the first communication device; the e-mail management method including steps of: receiving instructions to alter inspection conditions of the e-mail from the first communication device; altering the inspection conditions in the memory means according to the received alteration instructions; receiving an inspection request of the e-mail from the second communication device; and when the inspection request is received, permitting the inspection of the e-mail that meets the inspection conditions in the memory means.

The second e-mail management method according to the present invention is an e-mail management method realized by a communication device that can connect with the e-mail management device, and includes steps of:
acquiring from the e-mail management device e-mail addressed to the communication device and inspection conditions of the e-mail;
storing the acquired e-mail and inspection conditions;
when inspection of the e-mail is requested from a user, transmitting the inspection request to the e-mail management device if its own communication device can connect with the e-mail management device; and
permitting inspection of e-mail that meets the inspection conditions that are held if its own communication device cannot connect with the e-mail management device.

The first program according to the present invention causes an e-mail management device that is connected to a memory means for storing e-mail that is addressed to a second communication device and inspection conditions of the e-mail that have been transmitted from a first communication device and to execute processes of:
receiving instructions to alter inspection conditions of the e-mail from the first communication device;
altering the inspection conditions in the memory means according to the received alteration instructions;
receiving a request to inspect the e-mail from the second communication device;
upon receiving the inspection request, permitting inspection of e-mail that meets the inspection conditions in the memory means.

Finally, the second program according to the present invention causes a communication device that can communicate with the e-mail management device to execute processes of:
acquiring from the e-mail management device e-mail addressed to the communication device and inspection conditions of the e-mail;
storing the acquired e-mail and inspection conditions; and
when inspection of the e-mail is requested from a user, transmitting the inspection request to the e-mail management device if its own communication device can connect with the e-mail management device and permitting inspection of e-mail that meets the held inspection conditions if its own communication device cannot connect with the e-mail management device.

### Effect of the Invention

The present invention enables alteration of the inspection conditions of e-mail.

### Brief Description of the Drawings

FIG. 1 is a block diagram showing an e-mail system of an embodiment of the present invention;
FIG. 2 shows an example of a table used in an embodiment of the present invention;
FIG. 3 is a flow chart for explaining an example of the operation of an embodiment of the present invention;
FIG. 4 is a flow chart for explaining another example of the operation of an embodiment of the present invention;
FIG. 5 is a flow chart for explaining another example of the operation of an embodiment of the present invention;
FIG. 6 is a flow chart for explaining another example of the operation of an embodiment of the present invention;
FIG. 7 is a flow chart for explaining another example of the operation of an embodiment of the present invention;
FIG. 8 is a flow chart for explaining another example of the operation of an embodiment of the present invention;
FIG. 9 shows a table that is used in another embodiment of the present invention;
FIG. 10 is a flow chart for explaining another example of the operation of another embodiment of the present invention; and
FIG. 11 is a flow chart for explaining another example of the operation of another embodiment of the present invention.

### Best Mode for Carrying Out the Invention

An outline of an embodiment of the present invention is first described. In the present embodiment, the sender in an e-mail service between communication devices such as portable telephone terminals has a means for applying limitations to the inspection of e-mail by the receiver. More specifically, the sender has a means for storing the e-mail in a server, and when the receiver connects a communication device to the server and issues a request to inspect the e-mail, permitting inspection of the e-mail when inspection conditions of the e-mail are met.

This means enables detailed e-mail management by the sender such as "the receiver can inspect the e-mail only one time" and "the receiver can inspect the e-mail only during the period from day X to day Y."

In this means, e-mail is stored in a server, and the receiver connects his or her own communication device to the server when the user is to inspect e-mail by means of his or her own communication device. E-mail cannot be inspected by this means alone when, for example, the communication terminal of the receiver is unable to connect to the server such as when the communication terminal of the receiver is outside the communication range. As a result, the convenience of the receiver can be enhanced in the present embodiment by including a means such that the receiver can inspect e-mail even when the communication terminal of the receiver cannot connect to the server.

This means carries out the following processes (1) and (2).
(1) When the communication device of the receiver is in a connected state that allows connection to the server, the means saves e-mail, information relating to the e-mail, and inspection conditions for each item of e-mail in the terminal.
(2) When the receiver, when requesting inspection of e-mail, is in a disconnected state in which the communication device cannot connect to the server, the means determines in the terminal for each e-mail whether or not the inspection conditions of that e-mail are met. Only e-mail for which inspection conditions are met is then displayed. In this inspection, re-use such as the citing or local saving to the communication device of the e-mail is not possible.

An embodiment of the present invention is next described in detail with reference to the accompanying figures.

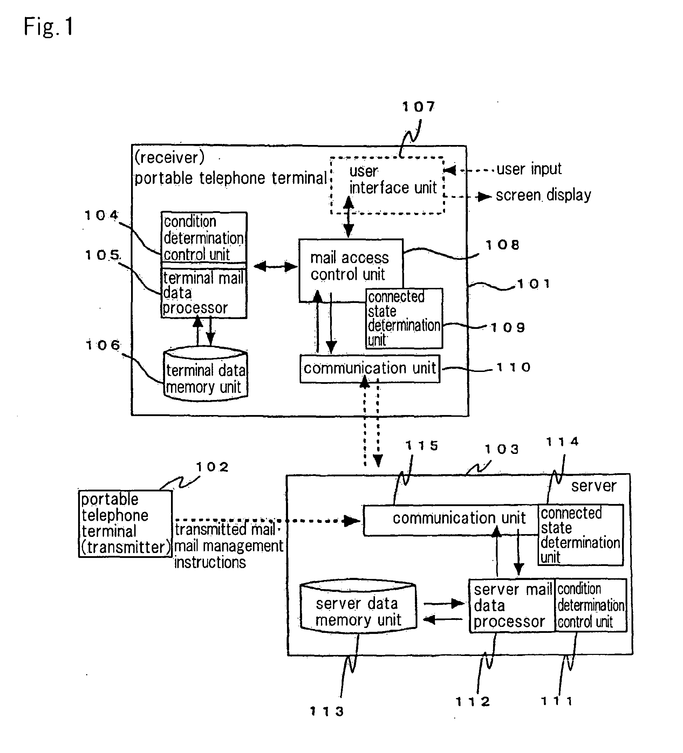

FIG. 1 is a block diagram showing the e-mail system according to the embodiment of the present invention. In FIG. 1, the e-mail system is provided with: portable telephone terminal 101 possessed by the receiver of e-mail; portable telephone terminal 102 possessed by the sender of e-mail; and server 103 that holds and manages e-mail of contracted users. Server 103 is capable of mutual communication with each of portable telephone terminals 102 and 103 by way of wireless communication lines such as public wireless lines.

Portable telephone terminal 101 is equipped with: condition determination control unit 104, terminal mail data processor 105, terminal data memory unit 106, user interface unit 107, mail access control unit 108, connected state determination unit 109, and communication unit 110. Portable telephone terminal 102 has the same configuration as portable telephone terminal 101 and a detailed description of its configuration is therefore here omitted.

Server 103 is equipped with condition determination control unit 111, server mail data processor 112, connected state determination unit 113, server data memory unit 114, and communication unit 115.

Portable telephone terminal 102 here constitutes the first communication device, portable telephone terminal 101 constitutes the second communication device, and server 103 constitutes the e-mail management device.

Communication unit 115 constitutes a reception means. Communication unit 115 receives e-mail addressed to portable telephone terminal 101 and inspection conditions of that e-mail that have been transmitted from portable telephone terminal 102. Communication unit 115 further receives from portable telephone terminal 102 e-mail management instructions relating to e-mail that has been already received. In the present embodiment, the e-mail management instructions are used as instructions to alter the inspection conditions of e-mail that has already been received.

Communication unit 115 further receives a request to inspect e-mail from portable telephone terminal 101.

Server data memory unit 113 constitutes the memory means. Server data memory unit 113 stores information relating to e-mail that is received by communication unit 115.

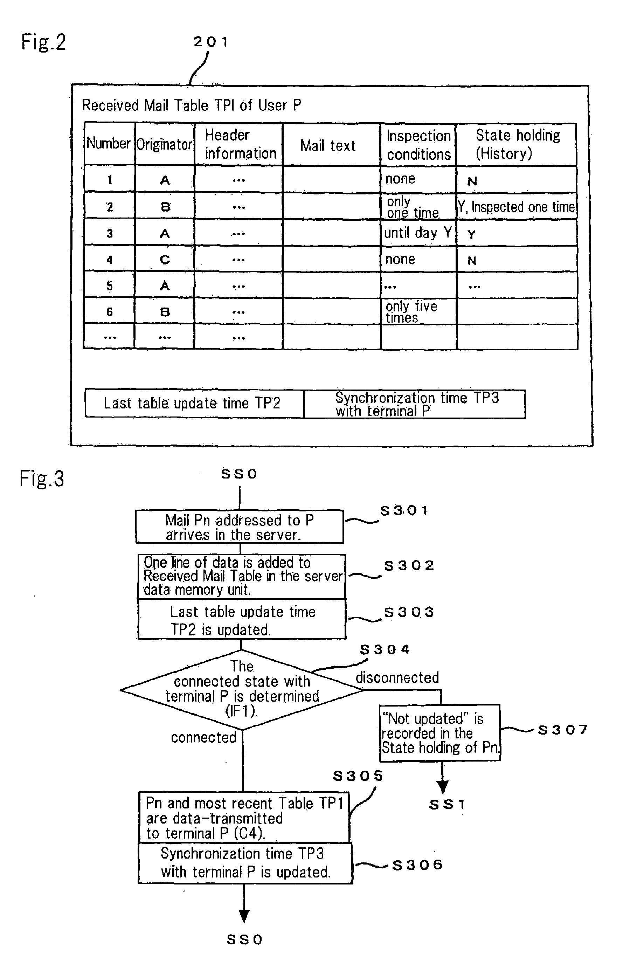

FIG. 2 is a block diagram of the information that is stored in server data memory unit 113. Server 103 controls e-mail by storing information 201 relating to the e-mail such as shown in FIG. 2 for each receiver. Information 201 relating to e-mail of FIG. 2 is information relating to e-mail addressed to the portable telephone terminal held by receiver P (hereinbelow also referred to as "terminal P"). Terminal P is portable telephone terminal 101.

Information 201 relating to e-mail includes received mail table TP1, last table update time TP2, and synchronization time TP3 with terminal P.

Received mail table TP1 shows, for each single item of e-mail, not only a number for identifying that e-mail, the originator of that e-mail, header information (sender information, receiver information, time, title, etc.), but also text (also including attached files) as well as inspection conditions of the e-mail and saved information of the e-mail.

The inspection conditions are the conditions for permitting inspection of the e-mail by a receiver. For example, the inspection conditions may be: "The e-mail can be inspected three times, and after three inspections the e-mail is to be destroyed" and "Inspection by the receiver is permitted only during the interval from day X to day Y." In addition, state holding is information holding the state of the e-mail that relates to inspection or updating in a terminal (to be explained) for this e-mail, and for example, shows states such as "Inspected one time" for e-mail for which inspection is permitted only three times.

Last table update time TP2 shows the time the received mail table TP1 was updated. Synchronization time TP3 shows the last time that the terminal that was preregistered for user P to read e-mail (Terminal P 101) and server 103 synchronized data.

Returning to FIG. 1, connected state determination unit 114 determines whether or not terminal P 101 is connected with server 103.

Server mail data processor 112 constitutes the alteration means. Server mail data processor 112 alters information relating to e-mail in server data memory unit 113 according to the mail control instructions received by communication unit 115.

Condition determination control unit 111 constitutes the inspection permission means. Condition determination control unit 111, upon reception of an inspection request by communication unit 115, searches for e-mail that meets the inspection conditions based on information relating to the e-mail in server data memory unit 113 and permits inspection of e-mail that meets the inspection conditions. Condition determination control unit 111 transmits e-mail for which inspection is permitted and a list of this e-mail to portable telephone terminal 101.

User interface unit 107 of portable telephone terminal 101 receives input from a user from an input unit (not shown) and displays display information to the user on a display unit (not shown). The input unit is, for example, a ten-key. The input from the user is, for example, an inspection request to request inspection of e-mail.

Connected state determination unit 109 determines whether or not portable telephone terminal 101 is in a connected state by determining whether or not the radio waves of portable telephone terminal 101 are outside the range of the base station and supplies the determination result as output.

Mail access control unit 108 constitutes the acquisition means. Mail access control unit 108, upon comprehending that portable telephone terminal 101 has returned from a disconnected state to the connected state based on the output of connected state determination unit 109, acquires information relating to e-mail of receiver P from server data memory unit 113 of server 103.

Terminal data memory unit 106 holds information relating to e-mail that was acquired by mail access control unit 108. The information in terminal data memory unit 106 is therefore the same as that of server data memory unit 113.

In addition, when inspection of e-mail is requested from a user, i.e., when user interface unit 107 receives an inspection request, mail access control unit 108 determines based on the output of connected state determination unit 109 whether portable telephone terminal 101 is in the connected state in which portable telephone terminal 101 can connect with server 103 or is in the disconnected state in which portable telephone terminal 101 cannot connect with server 103.

If portable telephone terminal 101 is in the connected state, mail access control unit 108 connects with server 103 and transmits the inspection request to server 103. The inspection request is transmitted by way of communication unit 110 of terminal 101 and communication unit 115 of server 103 to server mail data processor 112, and based on the information relating to the e-mail in server data memory unit 113, permits inspection of e-mail that meets the inspection conditions. A list of each item of e-mail for which inspection was permitted is then produced and the reading of each item of e-mail is carried out. Communication unit 110 constitutes the transmission means.

On the other hand, if portable telephone terminal 101 is in the disconnected state, condition determination control unit 104 permits the inspection of e-mail that meets the inspection conditions based on information relating to e-mail in terminal data memory unit 106. Condition determination control unit 104 constitutes the terminal permission means.

Mail access control unit 108 creates a list of each item of e-mail for which inspection was permitted and the text of each item of e-mail as display information and displays this display information on a display unit by way of user interface unit 107. In this way, the user (receiver) is able to inspect the display information. At the time of this inspection, mail access control unit 108 limits re-use of the e-mail. More specifically, mail access control unit 108 functions to prevent the text of the e-mail and photographs and files attached to the e-mail from being cited in other applications or copied to memory areas other than terminal data memory unit 106 in portable telephone terminal 102.

The operation is next described.

FIG. 3 is a flow chart for explaining the operation of server 103 when e-mail Pn addressed to portable telephone terminal 101 belonging to receiver P arrives from portable telephone terminal 102.

First, when e-mail Pn transmitted by the transmitter arrives in communication unit 115 of server 103 (Step S301), server mail data processor 112 adds an entry corresponding to e-mail Pn to the received mail table TP1 of user P in server data memory unit 113 (Step S302). The entries correspond to each line of received mail table TP1 of FIG. 2.

When an entry is added, server mail data processor 112 updates the last table update time TP2 to the value of the timestamp at that time (Step S303).

Connected state determination unit 114 of server 103 then determines whether terminal P 101 of receiver P is in a connected state with server 103 or not (IF1) (Step S304). If terminal P is in the connected state, information relating to e-mail in terminal P 101 is updated such that information relating to e-mail in terminal P 101 is synchronized with information relating to e-mail in server 103 (Step S305).

By this process, server 103 may transmit all of table TP1 to terminal 101 to overwrite table TP1 in terminal data memory unit 106, but preferably, only newly added portions in table TP1 based on differential information from a previous instance are transmitted to terminal 101 to add only these added portions to table TP1 in terminal data memory unit 106. "Y" and "N" in the state holding column of FIG. 2 indicate differential information, "Y" indicating that terminal P 101 is synchronized with server 103 in a preceding communication and that updating is not necessary, and "N" indicating that updating occurred after the preceding synchronization and that new updating (synchronization) between terminal 101 and server 103 is necessary.

When synchronization with terminal 101 is completed, server mail data processor 112 updates the synchronization time TP3 with terminal P 101 to the value of the timestamp at that time (Step S306).

When terminal P 101 is in a disconnected state in Step S304, server mail data processor 112 stores "N" in the state holding column (Step S307). Here, synchronization time TP3 is not updated, and update time TP2 therefore becomes more recent than synchronization time TP3, and information relating to e-mail enters state SS1 that requires synchronization.

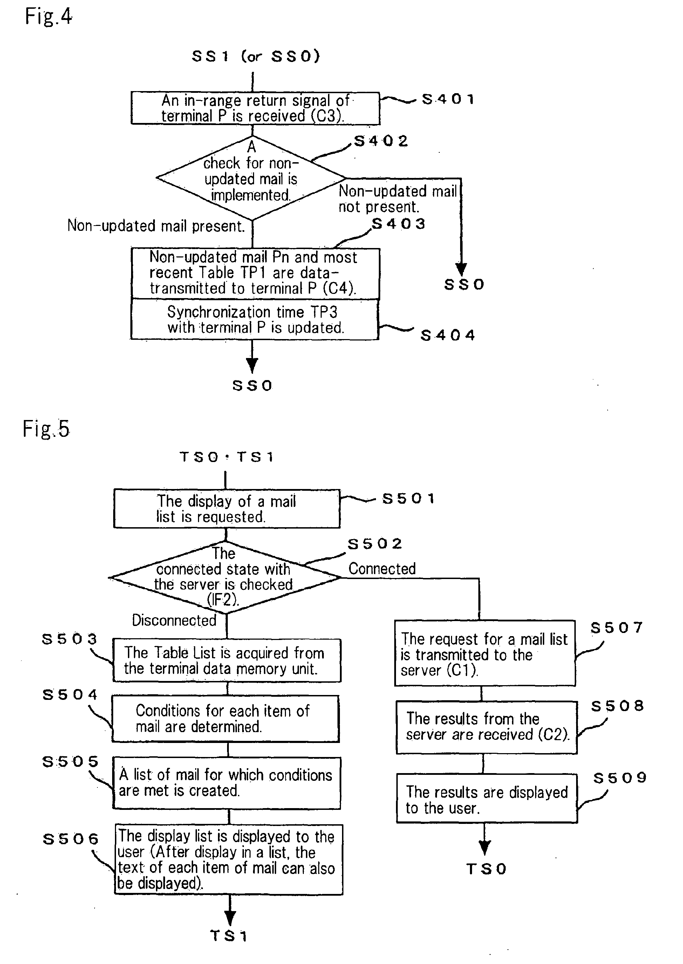

FIG. 4 is a flow chart for explaining the operation of server 103 when terminal P 101 returns from a disconnected state to a connected state. By receiving the in-range return signal that indicates that terminal P 101 has returned the connected state, server 103 comprehends that terminal P 101 has returned to the connected state.

When server 103 has received the in-range return signal from terminal P 101 (Step S401), server 103 compares synchronization time TP3 with the update time TP2 to determine whether there is e-mail for which updating has not been carried out in terminal P 101 (also referred to as "non-updated e-mail") (Step S402).

When the update time TP2 is more recent than the synchronization time TP3, there is non-updated e-mail, whereby information relating to the non-updated e-mail is transmitted to terminal P 101 from server 103 as in FIG. 3 (Step S403) and the information relating to e-mail in terminal P 101 is updated to the most recent state. When synchronization with terminal P 101 is completed, the synchronization time TP3 with terminal P 101 is updated to the value of the timestamp at that time (Step S404).

FIG. 5 is a flow chart for explaining the flow of operations at terminal P when a user requests the display of an e-mail list in terminal P 101.

When the display of a list of mail is requested by a user, connected state determination unit 109 of terminal P first determines whether terminal P and server 103 are in the connected state or not (IF2) (Step S502), and if in the connected state, request message C1 for a mail list is sent to server 103 (Step S507).

When a user has requested the display of an e-mail list, connected state determination unit 109 of terminal P 101 first determines whether terminal P 101 is in a connected state or not (IF2) (Step S502). If terminal P 101 is in the connected state, a request message C1 for an e-mail list is sent to server 103 (Step S507).

Server 103 creates a list of e-mail as will be described hereinbelow and sends this list to terminal P 101 (C2). Terminal P 101, upon receiving the list of e-mail, displays the list on a display unit by way of user interface unit 107 (Steps S508 and S509). Although the list is displayed here, the text of this e-mail is also displayed if there is subsequently a request for display of e-mail from the user. As described above, at the time of this inspection, the text of the e-mail (including attached pictures and files) cannot be copied to other memory areas of terminal P 101 or cited in other applications. Operation in the event of a disconnected state in Step S501 (IF2) is explained later.

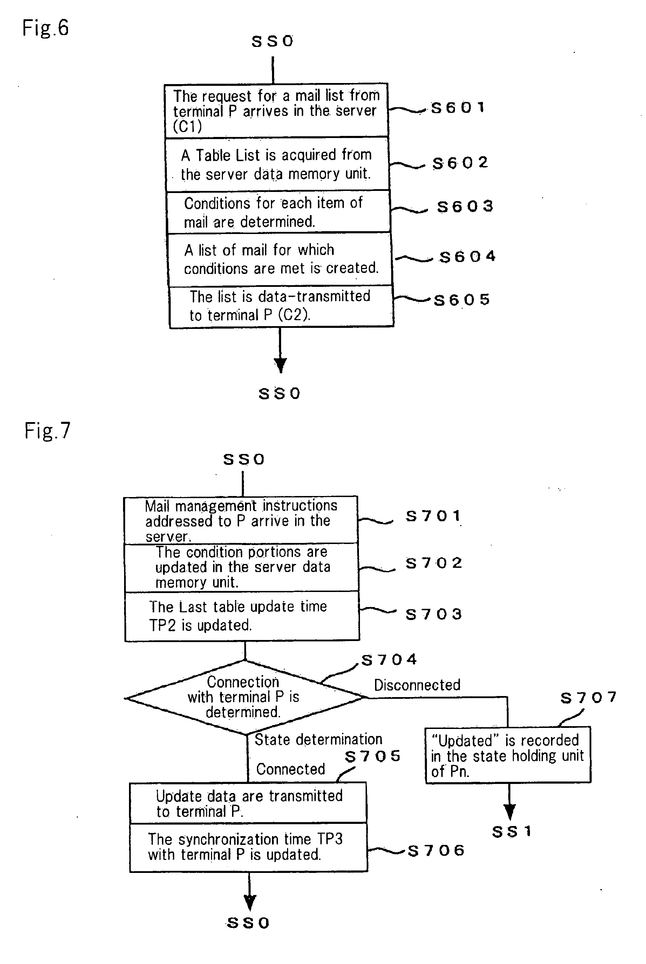

FIG. 6 is a flow chart for explaining the operation of server 103 when a request C1 for a list of e-mail is received from terminal P 101.

Upon receiving request C1 for a list of e-mail from terminal P 101 (Step S601), server mail data processor 112 first acquires all of table TP1 from server data memory unit 113 (Step S602). Condition determination control unit 111 then determines whether inspection is permitted or not for each item of e-mail (Step S603). The request C1 for a list of e-mail is an example of an inspection request.

For example, the inspection of the e-mail is permitted when the inspection condition is "Only three inspections are permitted and the e-mail is to be destroyed after three inspections" and the history is "One inspection completed," or when the inspection condition is "Inspection by the receiver is permitted only in the interval from day X to day Y" and the current day is within that time interval.

On the other hand, if the inspection condition is "Only three inspections are permitted, and the e-mail is to be destroyed after three inspections" and the history is "Three inspections completed," or when the inspection condition is "Inspection by the receiver is permitted only in the interval from day X to day Y" and the current day is after day Y, the e-mail cannot be inspected. Alternatively, inspection is not permitted if, after an e-mail is sent, it is indicated in the condition column that the originator has sent the message: "Inspection is temporarily halted until arrival of an inspection resumption message."

Based on these determination results, information for only lines corresponding to e-mail for which inspection is permitted are selected (Step S604), and this selected information is gathered and transmitted to terminal P 101 (C2) (Step S605).

As shown in the process on the right side of FIG. 5, these results are displayed in terminal P 101. In this explanation, server 103 gathers and sends lines for which inspection is permitted, but only a list of e-mail numbers for which inspection is possible may be sent, and terminal P may create a list of e-mail based on table TP1 that was sent beforehand and display this list.

Returning to FIG. 5, the operations of terminal P 101 are explained for a case in which a user requests display of a list of e-mail in terminal P 101 and terminal P 101 is in a disconnected state in IF2 (Steps S501 and S502).

In this case, terminal mail data processor 105 first acquires all of table TP1 in terminal data memory unit 106 (Step S503). Condition determination control unit 104 determines whether the e-mail can be inspected or not for each item of e-mail in table TP1 that was acquired (Step S504). The method of determination is basically the same as in the case of server 103. The information of the condition or state column of Table TP1 of terminal P is not necessarily synchronized with server 103, and the determination results are therefore in some cases different from the determination in server 103.

Based on these determination results, information of lines that correspond to e-mail for which inspection is permitted is selected and this selected information is displayed on a display unit by way of mail access control unit 108 and user interface unit 107 (Steps S505 and S506). Here, the display of a list is carried out first, but if there is a request to subsequently display the user's e-mail, the display of the text of the e-mail is implemented. As described hereinabove, the text of the e-mail and pictures and files that are attached to this e-mail cannot be copied to other memory areas.

FIG. 7 is a flow chart for explaining the operation of server 103 when e-mail management instructions relating to e-mail that has already been received arrive in server 103.

The e-mail management instructions are instructions for altering the inspection condition of e-mail that was set to, for example, "Inspection possible without conditions" to "Inspection prohibited: Delete" or "Inspection temporarily halted until the arrival of an inspection resumption message," or for altering "Three inspections possible" and "Inspection possible until day Y" to "One time" and "Until day Z time T."

The transmitter first transmits the e-mail management instructions from portable telephone terminal 102, and these e-mail management instructions then arrive at communication unit 115 of server 103 (Step S701). Server mail data processor 112 then updates the inspection conditions of entries corresponding to the e-mail of received mail table TP1 of user P of server data memory unit 113 of server 103 according to the e-mail management instructions (Step S702).

When this updating of received mail table TP1 has been completed, last table update time TP2 is updated to the value of the timestamp at that time (Step S703).

It is next determined if terminal P 101 is in the connected state or not (Step S704). If terminal P 101 is in the connected state, information relating to e-mail in terminal P 101 is updated such that the information relating to e-mail in terminal P 101 is synchronized with the information relating to e-mail in server 103 by terminal mail data processor 105 as when new e-mail arrives (Step S705). When the synchronization of terminal P 101 and server 103 is completed, synchronization time TP3 is updated to the value of the timestamp at that time (Step S706).

On the other hand, when not in the connected state in Step S704 (the terminal is out of range), "N" is recorded in the state holding column of table TP1, and because this line was updated in the preceding synchronization, the need for new synchronization and updating of the terminal is indicated (Step S707).

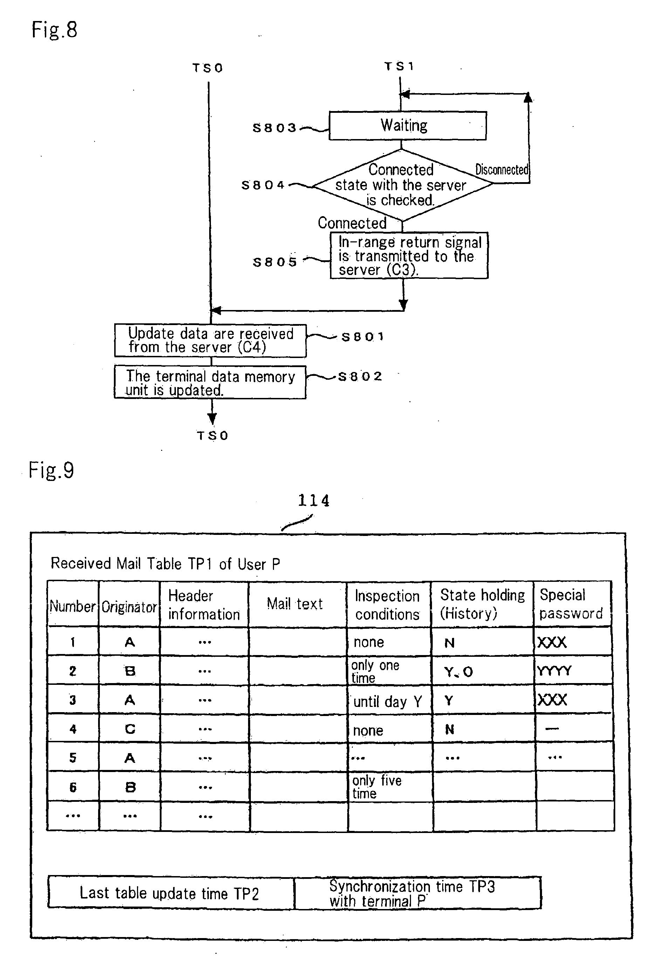

FIG. 8 is a flow chart for explaining the flow of operations in terminal P when information relating to new e-mail is received from server 103 in terminal P.

First, as in the process on the right side, polling is carried out in connected state determination unit 109 of terminal P 101 until terminal P 101 returns to the connected state (Step S803). When terminal P 101 returns to the connected state (Step S804), in-range return signal C3 reporting that terminal P 101 has returned into range is sent to server 103 (Step S805).

As explained in FIG. 4, upon receiving in-range return signal C3, server 103 creates information of an e-mail list for which updating is required if there is non-updated e-mail and sends this list to terminal P 101 (C4) (Step S801). Terminal P uses this list by way of mail access control unit 108 and terminal mail data processor 105 and updates terminal data memory unit 106.

In this way, when terminal P 101 enters the connected state from the disconnected state, terminal P 101 acquires information relating to e-mail from server 103.

The effect is next described

As described hereinabove, according to the present embodiment, when portable telephone terminal 101 on the receiving side of e-mail and server 103 are in the connected state, information relating to e-mail in server data memory unit 113 is acquired in terminal 101 and saved in terminal data memory unit 106.

If terminal 101 and server 103 are not in the connected state when user interface unit 107 receives inspection instructions, terminal mail data processor 105 reads information relating to the e-mail in terminal data memory unit 106. Based on this information that was read, condition determination control unit 104 permits inspection of e-mail that meets the inspection conditions. Terminal mail data processor 105 then produces a list of the e-mail for which permission was granted and the text of the e-mail as display information and displays this display information by way of user interface unit 107.

In a conventional e-mail management method, when a transmitter sends e-mail and a receiver receives the e-mail on his or her own terminal, the receiver is able to freely inspect the e-mail but the transmitter is unable to control the inspection or re-use of the e-mail.

In contrast, in the present embodiment, the transmitter can effect desired control over e-mail such as: "I wish to transmit and show a photograph to a receiver, but out of concern that the photograph may be misused if left with the receiver, I wish to delete the photograph when necessary," and "I wish to send explanatory materials for business, but I want to block inspection before day X and after day Y." In addition, in contrast to a case in which e-mail is placed only in server 103, even when terminal 101 is not connected to server 103, the originator can effect desired control over e-mail.

When communication unit 115 of server 103 receives mail control instructions, server mail data processor 112 alters the inspection conditions in server data memory unit 113. In this case, the transmitter is able to alter the inspection conditions.

Another embodiment is next described.

It is assumed that, when inspection conditions that are not in effect for a particular e-mail are held in terminal P 101, and moreover, that terminal P 101 is continuously out of range, the transmitter alters the inspection conditions in the server. In this case, it is possible that the e-mail cannot be inspected because terminal P continues to be out of range even though the receiver would normally be able to inspect the e-mail due to the alteration of the inspection conditions.

For example, a case of this type may occur in which: (1) the transmitter sets the inspection conditions to enable inspection until a predetermined date (for example, 9/27); (2) the receiver moves out of range of terminal 101 while holding these inspection conditions without change in terminal 101; and (3) the transmitter alters the inspection condition to "Allow without conditions." In this case, if the receiver continues to be out of range and the predetermined date is passed, the conditions of terminal 101 remain unchanged and, despite the transmitter's intentions, inspection is not enabled.

FIGs. 9-11 are figures according to the present embodiment for dealing with such a case. In this embodiment, the transmitter sets a special password in advance in e-mail having this potential for permitting inspection as an exception, and the special password is stored in a table to be shown as information 114 relating to e-mail in FIG. 9. The special password is an example of password information.

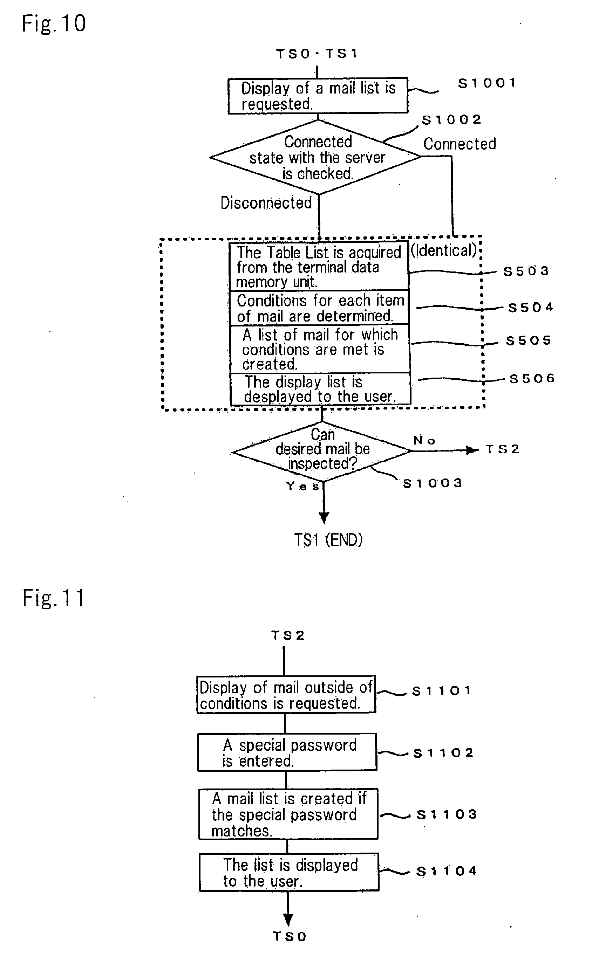

As shown in FIG. 10, an inspection request is transmitted from portable telephone terminal 101 to server 103 (Step S1001), and because terminal 101 is out of range, a list is created of e-mail for which inspection is permitted by condition determination in terminal 101 similar to FIG. 5 (Steps S1002 and S503-506). Subsequently, when inspection of the desired e-mail of the transmitter is not enabled (Step S 1003), the receiver applies as input a request to display a list of e-mail outside conditions in terminal 101 (S1101) and further applies the special password that is to enable display of the e-mail (S1102), as shown in FIG. 11.

This password is obtained by, for example, sending an inquiry to the transmitter by landline telephone at the time of this type of abnormal situation or ascertaining beforehand in preparation for such a case. When the special password is applied as input, condition determination control unit 104 examines table TP1 in terminal 101 and permits the inspection of e-mail (a plurality of items may exist) for which the special password that was entered as input matches the special password in the table TP1. Condition determination control unit 104 then creates a list of e-mail for which inspection has been permitted (S1103). Inspection of desired e-mail in the table is thus enabled (Step S1104). The other operations are the same as in the above-described embodiment.

This additional embodiment not only exhibits the same effect as the above-described embodiment, but also enables a receiver to inspect e-mail even when a case occurs in which, although the receiver should by rights be able to inspect e-mail, the receiver cannot inspect e-mail because terminal P continues to be out of range.

In addition, although the communication device was described as a portable telephone terminal in each of the embodiments, the present invention can be applied in communication devices having data processing functions and communication functions such as PHS (Personal Handyphone Systems) or PDA (Personal Data Assistance or Personal Digital Assistants).

The present invention may also be realized by recording a program for realizing the functions of portable telephone terminals 101 and 102 and server 103 described hereinabove on a recording medium that can be read in a computer and by then causing the computer to read and execute the program that is recorded on this medium.

Although the invention of the present application was described above with reference to the embodiments, the invention of the present application is not limited to the above-described embodiments. The configuration and details of the invention of the present application is open to various modifications that will be understood by one of ordinary skill in the art within the scope of the invention.

The invention according to the present embodiments can be used in a communication device (in particular, a portable communication device) having data processing functions and communication functions such as a portable telephone, PHS, PDA, and a portable personal computer.

This application claims priority based on JP-A-2007-306800 for which application was submitted on November 28, 2007 and incorporates all of the disclosures of that application.

## Claims

1. An e-mail management device comprising:
memory means for storing e-mail addressed to a second communication device and inspection conditions of said e-mail that have been transmitted from a first communication device;
reception means for receiving alteration instructions of inspection conditions of said e-mail from said first communication device, and receiving an inspection request of said e-mail from said second communication device;
alteration means for altering inspection conditions in said memory means according to alteration instructions received by said reception means; and
inspection permission means for, when said reception means receives said inspection request, permitting inspection of e-mail that meets said inspection conditions in said memory means.

2. A communication device that is capable of communication with the e-mail management device as set forth in claim 1, comprising:
acquisition means for acquiring from said e-mail management device e-mail addressed to its own terminal and inspection conditions of said e-mail;
holding means for holding the e-mail and inspection conditions that were acquired by said acquisition means;
transmission means for, when inspection of said e-mail is requested from a user, transmitting said inspection request to said e-mail management device if its own communication device can connect with said e-mail management device; and terminal permission means for, when inspection of said e-mail has been requested from a user, permitting inspection of e-mail that meets the inspection conditions in said holding means if its own communication device cannot connect with said e-mail management device.

3. The communication device as set forth in claim 2, wherein said acquisition means acquires the most recent e-mail and the most recent inspection conditions from said e-mail management device when its own device can connect with said e-mail management device.

4. The communication device as set forth in claim 2 or claim 3, wherein:
password information is set in said e-mail; and
said terminal permission means permits inspection of said e-mail when password information is received as input from a user and when the received password information matches said password information that was set in said e-mail.

5. An e-mail management method realized by an e-mail management device that includes a memory means for storing e-mail addressed to a second communication device and inspection conditions of said e-mail that have been transmitted from a first communication device; said e-mail management method comprising steps of:
receiving instructions to alter inspection conditions of said e-mail from said first communication device;
altering inspection conditions in said memory means according to said received alteration instructions;
receiving an inspection request of said e-mail from said second communication device; and
when said inspection request is received, permitting inspection of e-mail that meets said inspection conditions in said memory means.

6. An e-mail management method realized by a communication device capable of communicating with the e-mail management device as set forth in claim 1, comprising steps of:
acquiring from said e-mail management device e-mail addressed to said communication device and acquiring inspection conditions of e-mail;
storing said acquired e-mail and inspection conditions; and
when inspection of said e-mail is requested from a user, transmitting said inspection request to said e-mail management device if its own communication device can connect with said e-mail management device, and permitting inspection of e-mail that meets said held inspection conditions if its own communication device cannot connect with said e-mail management device.

7. The e-mail management method as set forth in claim 6, further comprising a step of acquiring the most recent e-mail and the most recent inspection conditions from said e-mail management device when its own communication device can connect with said e-mail management device.

8. The e-mail management method as set forth in claim 6 or claim 7, wherein password information is set in said e-mail, said e-mail management method further comprising, when password information is received as input from a user, permitting inspection of said e-mail when said received password information matches said password information that was set in said e-mail.

9. A program for causing an e-mail management device that is connected to a memory means for storing e-mail that is addressed to a second communication device and for storing inspection conditions of said e-mail that have been transmitted from a first communication device, to execute:
receiving instructions to alter inspection conditions of said e-mail from said first communication device;
altering inspection conditions in said memory means according to said received alteration instructions;
receiving a request to inspect said e-mail from said second communication device; and
upon receiving said inspection request, permitting inspection of e-mail that meets said inspection conditions in said memory means.

10. A program for causing a communication device that can connect with the e-mail management device as set forth in claim 1, to execute:
acquiring from said e-mail management device e-mail addressed to said communication device and acquiring inspection conditions of said e-mail;
storing said acquired e-mail and inspection conditions; and
when inspection of said e-mail is requested from a user, transmitting said inspection request to said e-mail management device if its own communication device can connect with said e-mail management device and permitting inspection of e-mail that meets said held inspection conditions if its own communication device cannot connect with said e-mail management device.

11. The program as set forth in claim 10, further causing said communication device to execute a process of acquiring the most recent e-mail and the most recent inspection conditions from said e-mail management device when its own communication device can connect with said e-mail management device.

12. The program as set forth in claim 10 or claim 11, wherein, when password information is set in said e-mail, said program further causes said communication device to, when password information is received as input from a user, permit inspection of said e-mail when the received password information matches said password information that was set in said e-mail.
